Europäisches Patentamt

**European Patent Office**

Office européen des brevets

(19)

(11) Publication number: **0 126 641**
**B1**

## EUROPEAN PATENT SPECIFICATION

(12)

(45) Date of publication of patent specification: **31.08.88**

(21) Application number: **84303399.4**

(22) Date of filing: **18.05.84**

(51) Int. Cl.⁴: **B 26 B 29/00,** B 26 D 7/22,
B 27 G 19/02, B 23 Q 11/06

(54) **Improvements relating to guard arrangements for portable rotary cutters.**

(30) Priority: **19.05.83 GB 8313842**

(43) Date of publication of application:
**28.11.84 Bulletin 84/48**

(45) Publication of the grant of the patent:
**31.08.88 Bulletin 88/35**

(84) Designated Contracting States:
**DE FR GB**

(56) References cited:
**GB-A- 575 762**
**GB-A- 966 065**
**US-A-2 741 282**

(73) Proprietor: **KANGO LIMITED**
**Hanger Lane**
**London W5 1DS (GB)**

(72) Inventor: **Ford, Leslie Walter**
**34 Derwent Avenue**
**Hatch End Middlesex (GB)**

(74) Representative: **Brooke-Smith, Fred et al**
**STEVENS, HEWLETT & PERKINS 5 Quality Court**
**Chancery Lane**
**London WC2A 1HZ (GB)**

Courier Press, Leamington Spa, England.

## Description

This invention relates to a guard arrangement for a portable rotary cutter, comprising a mounting member adapted to be secured to the casing of the cutter about the output shaft of the cutter, a guard plate having a central portion extending about the axis of the output shaft and an outer portion extending part way about said axis, said guard plate being mounted by the central portion thereof on said mounting member for rotational movement relative thereto about the axis of the output shaft, and releasable means for fixing the guard plate in any selected position in a range of rotational positions relative to the mounting member.

U.S. Specification No. 2741282 discloses a guard arrangement for a disc saw comprising a fixed guard plate and a movable guard plate. The movable guard plate is fixable in selected positions about the axis of rotation of the cutter blade and co-operates with the fixed guard plate to vary the exposed proportion of the periphery of the cutter blade thereby varying the depth of cut of the blade.

According to this invention the guard plate constitutes the sole guard for the periphery of the cutter blade whereby the proportion of the peripheral length of the cutter blade exposed by the guard plate is the same for all of said rotational positions of the guard plate.

Preferably said means is releasable against the action of biasing spring means.

In one embodiment of the invention the releasable means for fixing the guard plate relative to the fixed member comprises a detent or detents and a set of notches spaced about said axis, said detent or detents and said set of notches being provided one on the fixed member and the other on the guard plate for movement into and out of engagement with each other and being biased by said spring means into engagement with each other. The detent or detents are preferably provided on a ring which encircles the axis of said output shaft and which is mounted on the fixed member for guided diametral movement relative thereto.

In another embodiment of the invention, the guard plate is disposed axially between a fixing clamp plate and a cam device which is selectively operable into a first position to move the guard plate into axial abutment with the clamp plate and into a second position to permit the guard plate to move axially away from the clamp plate, a detent and a set of notches spaced apart about said axis being provided one on the guard plate and the other on the clamp plate such that the detent can be engaged in any one of the notches when the cam device is in said second position and can be secured in such engagement by operation of the cam device into said first position.

Two embodiments of the invention will now be described by way of example with reference to the accompanying drawings in which:

Figure shows in axial section a guard according to the invention,

Figure 2 is an end view in the direction of the arrow 2 of Figure 1 with the guard plate locked in position, certain components being omitted to show the construction,

Figure 3 is a view corresponding to Figure 2 but showing the guard plate released for rotational adjustment,

Figure 4 is an elevation, partly in section, of a second form of guard according to the invention,

Figure 5 is a front view of the guard shown in Figure 4, and shows the guard in a locked condition, and

Figure 6 is a view corresponding to Figure 5 but shows the guard in an unlocked condition.

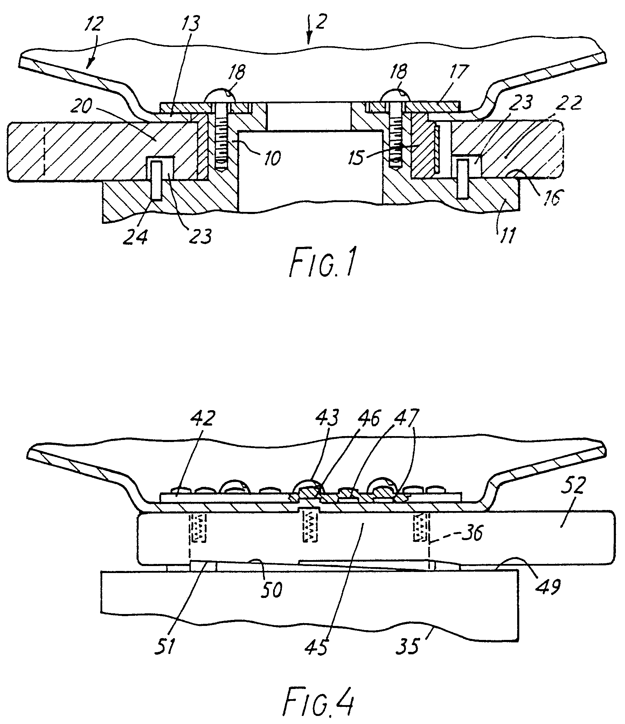

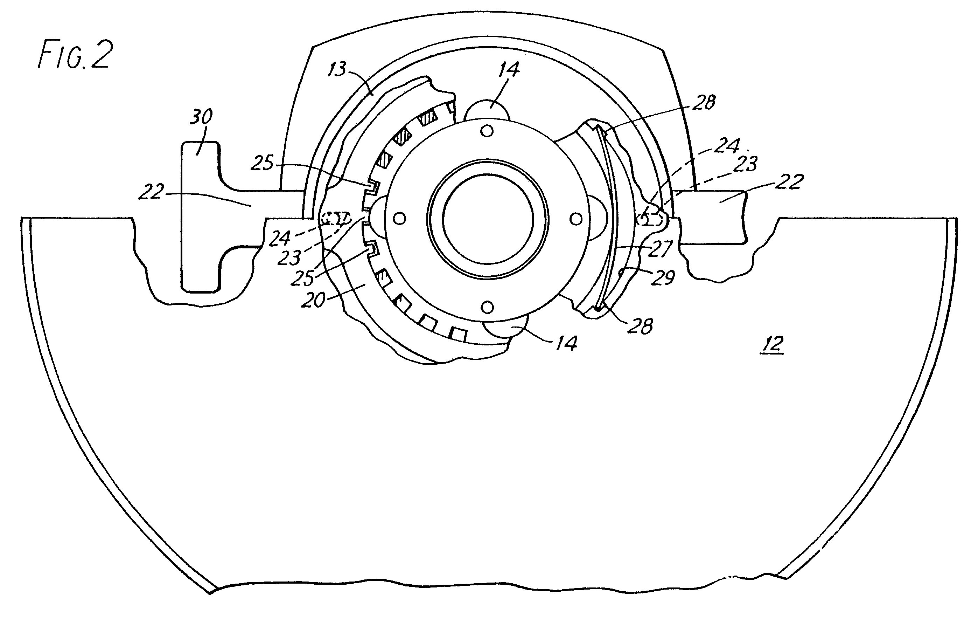

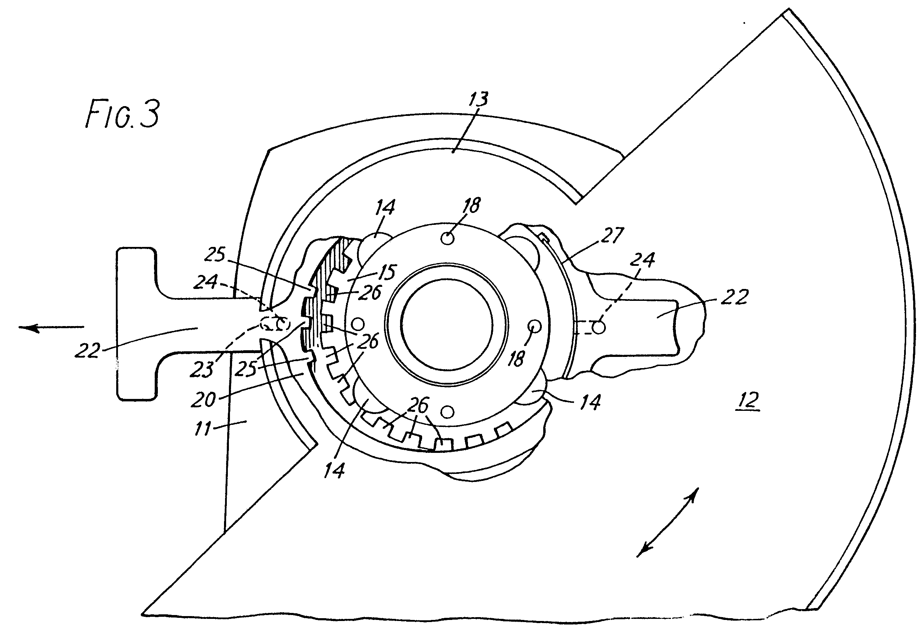

Referring first to Figures 1 to 3 of the drawings, the movable components of the guard are mounted on a forwardly-projecting cylindrical boss 10 formed at the forward end of the main casing 11 of a portable rotary cutting tool. The boss 10 has a central aperture through which the output shaft (not shown) of the tool extends. A cutting disc (not shown) is mounted on the end of the shaft and is guarded by a semi-circular guard plate 12 having an annular hub 13. The inner edge of the hub of the guard plate has four semi-circular cutouts which engage correspondingly profiled axial projections 14 in a rebate at the front edge of an inner ring 15 mounted on the boss 10 for rotation about the axis of the output shaft. The rear edge of the ring abuts against a forwardly-facing annular shoulder 16 on the casing 11 and the ring and guard plate are held axially together and in abutment with the shoulder by a clamp plate 17 which is secured to the front face of boss 10 by screws 18. Disc 17 is omitted from Figures 2 and 3 to show the construction more clearly.

The inner ring 15 is encircled by an outer ring 20 which is slightly oval and which has radial arms 22 projecting outwardly in diametrically opposite directions. These arms are aligned with the greater diameter axis of the ring and have in their rear surfaces radial slots 23 in which respective guide pins 24 located in the shoulder 16 are engaged. In consequence of its ovality the outer ring 20 is slidable relative to the boss 10 and the inner ring 15, guided by the pins 24. The radially inner surface of the outer ring has three circumferentially spaced detents 25 thereon which are engageable with a substantially semi-circular array of notches 26 on the radially outer surface of the inner ring 15. Diametrically opposite the detents 25 a leaf spring 27 is disposed between the outer and inner rings and has its ends engaged in respective axial grooves 28 formed at opposite circumferential ends of an arcuate recess 29 in the inner periphery of the outer ring, the middle of the leaf spring being pressed against the outer surface of the inner ring so as to load the outer ring resiliently into a position in which the detents 25 are engaged with notches 26. Recess 29 is of a depth to accommodate the thickness of the leaf spring. A cross-piece 30 on the arm 22 at the side diametrically opposite the spring 27 forms a handle enabling the outer ring to be pulled against the force of the spring to disengage the detents from the notches as shown in Figure 3. The guard plate and inner ring can then be rotated to the desired position about the axis of the output shaft, whereupon the crosspiece 30 is released to enable the detents to locate in appropriate notches under the influence of the spring 27 to secure the guard plate in its new position. It may be preferred to use the other arm 22 for adjusting the position of the guard plate, and in this case the arm is pushed to release the guard for rotation.

If desired, a locking screw may be engaged in a threaded boss in the outer ring 20 with its inner end aligned with the middle of the leaf spring to permit the screw to be tightened against the spring and thus prevent inadvertent movement of the outer ring to disengage the detents from the notches. In an alternative arrangement the leaf spring is replaced by a plunger loaded by a helical compression spring.

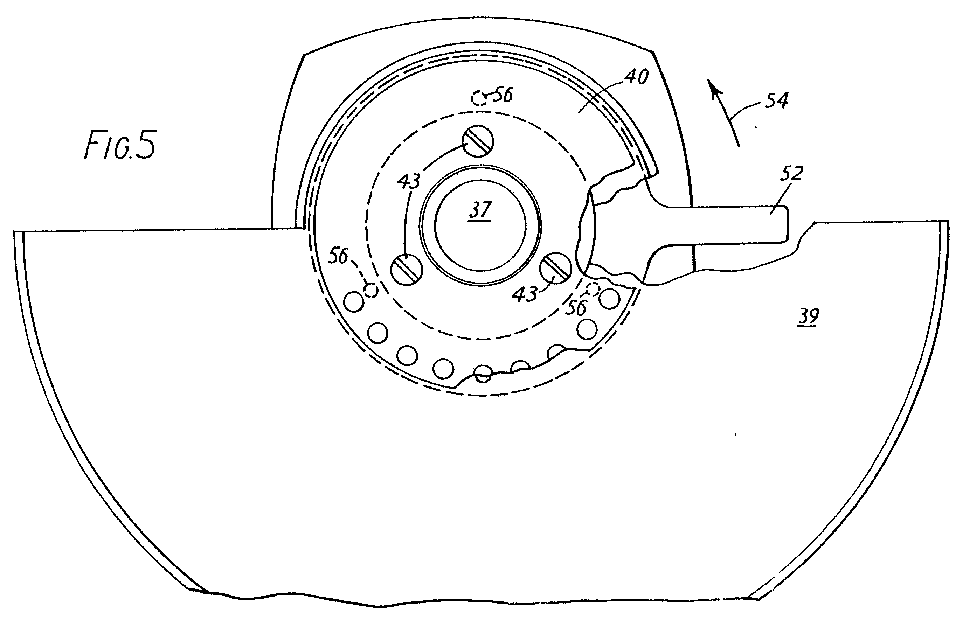

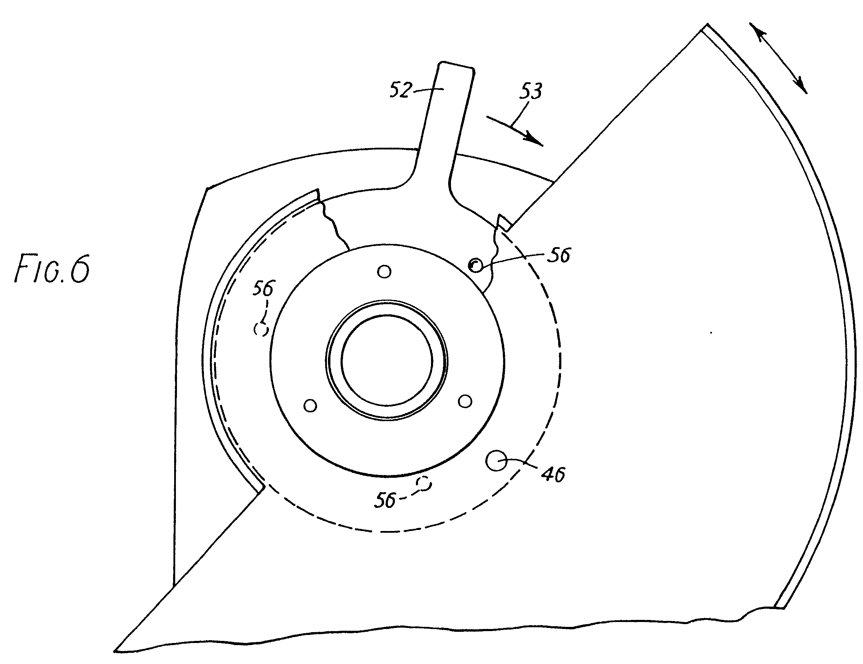

A second embodiment of the invention is shown in Figures 4, 5 and 6 of the drawings. In this construction the forward end of the casing 35 of a rotary cutter has an integral boss 36 through which the drive shaft 37 projects. Shaft 37 carries a cutting disc (not shown). The cutting disc is guarded by a guard plate 39 having an annular central portion 40 and a part-circular outer portion. An annular clamp plate 42 (not shown in Figure 6) is secured by screws 43 to the front face of the boss 36, and the central portion 40 of the guard plate is disposed axially between the clamp plate and the forward face of a locking ring 45 which extends about the boss 36. The front face of the central portion of the guard plate is formed with a projection 46 which is capable of engagement in any selected one of a series of recesses 47 arranged in an arc on the rear face of the clamp plate 42 so as to locate the guard plate in any one of a plurality of rotational positions relative to the boss 36. A forwardly facing shoulder 49 on the casing is formed with a series of ramps 50 extending circumferentially of the boss, and the rear axial face of the locking ring 45 is formed with complementary circumferentially extending ramp surfaces 51 so that rotational movement of the locking ring 45 by manual movement of a radially outwardly projecting arm 52 of the locking ring in opposite directions as indicated by the arrows 53, 54 in Figure 6 and 5 respectively causes the ramp surfaces on the ring to ride up or down those on the casing so as respectively to apply and release an axial clamping action between the locking ring (backed by the casing) and the clamp plate. When the locking ring is operated to release the clamping action, the guard plate can be rotated relative to the retaining plate and can be clamped in any selected position. For this purpose the projection 46 on the central portion of the guard plate conveniently part-spherical or otherwise domed so that a rotational force applied to the released guard plate causes the guard plate to move axially against the force of three compression springs 56 disposed in axial recesses in the locking ring and bearing against the rear face of the central portion of the locking ring, to disengage the projection 46 from a recess 47 in the clamp plate and to urge the projection axially into engagement with another of the recesses 47 as the guard plate is rotated. When the guard plate reaches its selected position the locking ring is rotated to cause the ramp surfaces to move the locking ring axially forward to clamp the guard plate in its new position.

In alternative arrangements an axial face of the central portion of the guard may be formed with interruptions, such as teeth, in its planar form to engage with a complementary fixed surface, an axial cam action being provided, for example as in the arrangement of Figures 4 to 6 to apply and release a clamping action between the guard and the fixed surface.

The provision for adjustment of the guard plate in the way described above is advantageous in certain classes of cutting work, as when grinding internal welds on large diameter steel pipes, and permits safer operation of angle grinders.

**Claims**

1. A guard arrangement for a portable rotary cutter, comprising a mounting member (10) adapted to be secured to the casing (11) of the cutter about the output shaft of the cutter, a guard plate (12) having a central portion (13) extending about the axis of the output shaft and an outer portion extending part way about said axis, said guard plate (12) being mounted by the central portion thereof on said mounting member (10) for rotational movement relative thereto about the axis of the output shaft, and releasable means (25, 26) for fixing the guard plate in any selected position in a range of rotational positions relative to the mounting member characterised in that said guard plate (12) constitutes the sole guard for the periphery of the cutter blade whereby the proportion of the peripheral length of the cutter blade exposed by the guard plate is the same for all of said rotational positions of the guard plate.

2. A guard arrangement as claimed in claim 1, characterised in that said means is releasable against the action of biasing spring means (27).

3. A guard arrangement as claimed in claim 2, characterised in that the releasable means for fixing the guard plate (12) relative to the fixed member (10) comprises a detent or detents (25) and a set of notches (26) spaced about said axis, said detent or detents and said set of notches being provided one on the fixed member and the other on the guard plate (12) for movement into and out of engagement with each other and being biased by said spring means (27) into engagement with each other.

4. A guard arrangement as claimed in claim 3, characterised in that the detent is provided on a ring (20) which encircles the axis of said output shaft and which is mounted on the fixed member (10) for guided diametral movement relative thereto.

5. A guard arrangement as claimed in claim 4, characterised in that the ring (20) has a radially outwardly extending handle (22) extending in alignment with the direction of said guided diametral movement by which handle (22) the ring (20) can be operated to disengage the detent or detents (25) from the set of notches (26).

6. A guard arrangement as claimed in claim 1 or claim 2, characterised in that the guard plate (12) is disposed axially between a fixing clamp plate (42) and a cam device (45) which is selectively operable into a first position to move the guard plate (12) into axial abutment with the clamp plate (42) and into a second position to permit the guard plate (12) to move axially away from the clamp plate (42), a detent (46) and a set of notches (47) spaced apart about said axis being provided one on the guard plate (12) and the other on the clamp plate (42) such that the detent (46) can be engaged in any one of the notches (47) when the cam device (45) is in said second position and can be secured in such engagement by operation of the cam device (45) into said first position.

7. A guard arrangement as claimed in claim 6, wherein said cam device (45) comprises one or more circumferentially-extending axially-facing ramp surfaces (51) on said mounting member, each of which surfaces (51) is positioned for engagement by a fixed surface (49, 50) such that rotation of the mounting member about said axis causes the mounting member to move axially relative to said fixed surface (49, 50).

8. A guard arrangement as claimed in claim 7, wherein said fixed surface or surfaces (49, 50) are provided by the casing (35) of the tool.

9. A guard arrangement as claimed in claim 8, wherein the casing (35) of the tool provides a matching ramp surface (50) constituting said fixed surface and corresponding to the ramp surface or each of the ramp surfaces (51) on the mounting ring.

**Patentansprüche**

1. Schutzanordnung für ein tragbares Schneidwerkzeug mit einem Befestigungsteil (10), der um die Abtriebswelle des Schneidwerkzeuges herum am Gehäuse (11) des Schneidwerkzeugs befestigbar ist, mit einer Schutzplatte (12), die einen die Achse der Abtriebswelle umgebenden, zentralen Teil (13) und einen äußeren Teil besitzt, der die Achse teilweise umgibt, wobei die Schutzplatte (12) mit ihrem zentralen Teil auf dem Befestigungsteil (10) relativ zu diesem um die Achse der Abtriebswelle drehbar gelagert ist, und mit einer lösbaren Einrichtung (25, 26) zum Befestigen der Schutzplatte in einer in einem Bereich von Drehstellungen beliebig wählbaren Stellung relativ zu dem Befestigungsteil, dadurch gekennzeichnet, daß die Schutzplatte (12) den einzigen Schutz am Umfang des Schneidmessers bildet, wobei der von der Schutzplatte freigegebene Teil der Umfangslänge des Schneidmessers für alle genannten Drehstellungen der Schutzplatte gleich ist.

2. Schutzanordnung nach Anspruch 1, dadurch gekennzeichnet, daß die Befestigungseinrichtung gegen die Wirkung einer Vorbelastungsfedereinrichtung (27) lösbar ist.

3. Schutzanordnung nach Anspruch 2, dadurch gekennzeichnet, daß die lösbare Einrichtung zum Befestigen der Schutzplatte (12) gegenüber dem befestigten Teil (10) ein oder mehrere Rastglieder (25) und einen Satz von um die genannte Achse in Abständen voneinander angeordneten Kerben (26) besitzt und daß entweder das oder die Rastglieder oder der Satz von Kerben auf dem befestigten Teil und die jeweiligen Gegenstücke auf der Schutzplatte (12) angeordnet und zum Eingriff ineinander bewegbar bzw. auseinander ausrückbar sind und daß sie von der Federeinrichtung (27) im Einrücksinn vorbelastet sind.

4. Schutzanordnung nach Anspruch 3, dadurch gekennzeichnet, daß das Rastglied auf einem Ring (20) vorgesehen ist, der die Achse der Abtriebswelle umgibt und der auf dem befestigten Teil (10) relativ zu diesem längs eines Durchmessers geführt bewegbar gelagert ist.

5. Schutzanordnung nach Anspruch 4, dadurch gekennzeichnet, daß der Ring (20) einen radial auswärtsgerichteten Handgriff (22) besitzt, der sich in der Richtung der geführten diametralen Bewegung erstreckt und mit dem der Ring (20) zum Ausrücken des oder der Rastglieder (25) aus dem Satz von Kerben betätigbar ist.

6. Schutzanordnung nach Anspruch 1 oder 2, dadurch gekennzeichnet, daß die Schutzplatte (12) axial zwischen einer Festklemmplatte (42) und einer Kurvensteuerung (45) angeordnet ist, die wahlweise in einer erste Stellung bewegbar ist und dabei die Schutzplatte (12) bis zur axialen Anlage an der Klemmplatte (42) bewegt, sowie in eine zweite Stellung, in der die Kurvensteigerung eine Axialbewegung der Schutzplatte (12) von der Klemmplatte (42) weg gestattet, wobei entweder ein Rastglied (46) oder ein Satz von um die genannte Achse herum in Abständen voneinander angeordneten Kerben (47) auf der Schutzplatte (12) und die jeweiligen Gegenstücke auf der Klemmplatte (42) derart angeordnet sind, daß in der zweiten Stellung der Kurvensteuerung das Rastglied (46) zum Eingriff in eine beliebige der Kerben (47) bewegbar ist und durch die Bewegung der Kurvensteuerung (45) in die erste Stellung das Rastglied in dieser Eingriffsstellung festlegbar ist.

7. Schutzanordnung nach Anspruch 6, dadurch gekennzeichnet, daß die Kurvensteuerung (45) eine oder mehrere, in der Axialrichtung weisenden Rampenflächen (51) besitzt, die auf dem Tragteil ausgebildet sind und sich in der Umfangsrichtung erstrecken, und daß jede dieser Flächen (51) so angeordnet ist, daß eine ortsfeste Fläche (49, 50) derart an der Kurvenfläche angreifen kann, daß eine Drehung des Tragteils um die genannte Achse eine Axialbewegung des Tragteils relativ zu der genannten ortsfesten Fläche (49, 50) bewirkt.

8. Schutzanordnung nach Anspruch 7, dadurch gekennzeichnet, daß die ortsfeste Fläche oder die ortsfesten Flächen (49, 50) an dem Gehäuse (35) des Werkzeuges ausgebildet sind.

9. Schutzanordnung nach Anspruch 8, dadurch gekennzeichnet, daß das Gehäuse (35) des Werkzeuges mit einer rampenartigen Paßfläche (50) ausgebildet ist, die die genannte ortsfeste Fläche bildet und der Rampenfläche oder jeder der Rampenflächen (51) dfes Tragringes entspricht.

## Revendications

1. Elément protecteur pour un appareil de coupe portatif à disque, comportant un organe de montage (10) adapté pour être assujetti au carter (11) de l'appareil de coupe autour de l'arbre de sortie de ce dernier; une plaque protectrice (12) dont une partie centrale (13) s'étend autour de l'axe de l'arbre de sortie et une partie extérieure s'étend partiellement autour dudit axe, ladite plaque protectrice (12) étant montée par sa partie centrale sur ledit organe de montage (10) en vue d'un mouvement de rotation par rapport à celui-ci autour de l'axe de l'arbre de sortie; et des moyens détachables (25, 26) destinés à fixer la plaque protectrice dans une position quelconque sélectionnée dans une plage de positions de rotation par rapport à l'organe de montage, caractérisé en ce que ladite plaque protectrice (12) constitue la seule protection pour la périphérie de la lame de coupe, la proportion de la longueur périphérique de la lame de coupe non protégée par la plaque protectrice étant la même pour toutes lesdites positions de rotation de la plaque protectrice.

2. Elément protecteur, tel que défini dans la revendication 1, caractérisé en ce que lesdits moyens sont détachables à l'encontre de l'action exercée par un moyen de sollicitation élastique (27).

3. Elément protecteur, tel que défini dans la revendication 2, caractérisé en ce que les moyens détachables destinés à fixer la plaque protectrice (12) par rapport à l'organe fixe (10) comportent au moins un positionneur (25) et une série de crans (26) espacés autour dudit axe, ledit positionneur et ladite série de crans étant disposés l'un sur l'organe fixe et l'autre sur la plaque protectrice (12), en vue d'un déplacement les amenant à s'encliqueter et à se décliqueter mutuellement, et sollicités par ledit moyen élastique (27) pour venir s'encliqueter l'un avec l'autre.

4. Elément protecteur, tel que défini dans la revendication 3, caractérisé en ce que le positionneur est disposé sur un anneau (20) entourant l'axe dudit arbre de sortie et monté sur l'organe fixe (10) en vue d'un déplacement diamétral guidé vis-à-vis de celui-ci.

5. Elément protecteur, tel que défini dans la revendication 4, caractérisé en ce que l'anneau (20) possède une poignée (22) qui s'étend radialement vers l'extérieur et en alignement avec la direction dudit déplacement diamétral guidé, poignée (22) grâce à laquelle l'anneau (20) peut être actionné pour décliqueter le ou les positionneurs (25) vis-à-vis de la série de crans (26).

6. Elément protecteur, tel que défini dans la revendication 1 ou la revendication 2, caractérisé en ce que la plaque protectrice (12) est disposée axialement entre une plaque de fixation par serrage (42) et un dispositif de came (45) apte à être actionné sélectivement dans une première position afin de déplacer la plaque protectrice (12) pour l'amener en butée axiale avec la plaque de serrage (42) et dans une seconde position pour permettre à la plaque protectrice (12) de se déplacer axialement à distance de la plaque de serrage (42), un positionneur (46) et une série de crans (47) espacés les uns des autres autour dudit axe étant prévus l'un sur la plaque protectrice (12) et l'autre sur la plaque de serrage (42), de telle manière que le positionneur (46) puisse être encliqueté dans l'un quelconque des crans (47), lorsque le dispositif de came (45) se trouve dans ladite seconde position, et immobilisé dans cet état encliqueté grâce à un actionnement du dispositif de came (45) dans ladite première position.

7. Elément protecteur, tel que défini dans la revendication 6, dans lequel ledit dispositif de came (45) comporte, prévues sur ledit organe de montage, une ou plusieurs surfaces formant rampes (51) orientées axialement et qui s'étendent circonférentiellement, dont chacune est positionnée en vue d'un accouplement avec une surface fixe (49, 50), de telle manière qu'une rotation de l'organe de montage autour dudit axe entraîne un déplacement axial de celui-ci par rapport à ladite surface fixe (49, 50).

8. Elément protecteur, tel que défini dans la revendication 7, dans lequel la ou les surfaces fixes (49, 50) sont définies par le carter (35) de l'outil.

9. Elément protecteur, tel que défini dans la revendication 8, dans lequel le carter (35) de l'outil définit une surface formant rampe correspondante (50) qui constitue ladite surface fixe, et coïncide avec la ou les surfaces formant rampes (51) prévues sur l'anneau de montage.

FIG.1

FIG.4

FIG.2

*Fig.3*

0 126 641

FIG.5

FIG.6

0 126 641